# EUROPEAN PATENT APPLICATION

(11) **EP 0 816 149 A2**
(43) Date of publication of application: **07.01.1998**
(21) Application number: 97304579.2
(22) Date of filing: 26.06.1997
(51) Int. Cl.: B60J 1/18

(54) **Window Assembly**

(30) Priority: 26.06.1996 GB 9613398
(71) Applicant: J.C. BAMFORD EXCAVATORS LIMITED, Uttoxeter Staffordshire ST14 5JP (GB)
(72) Inventor: Leake, Ashley Stephen, Derby DE3 5HA (GB)
(74) Representative: Leach, John Nigel

(57) **Abstract**

An openable window assembly comprising a pair of spaced longitudinally extending side frame (14) members which define therebetween a generally upwardly extending opening (15) which is openable or closable by a window wherein each side frame member has a first guide means to guide a first element associated with the window generally longitudinally of the side frame (14) members and power means to cause movement of the window relative to the guide means whereby said opening may be opened or closed by said window.

## Description

### Description of Invention

This invention relates to a window assembly, particularly, but not exclusively, for application to an operator's cabin of a vehicle such as a material handling vehicle, for example, a backhoe excavator. The window is preferably the rear window of a backhoe excavator and it is desirable for the window to be open when the driver is facing rearwardly so that he can observe more clearly the backhoe excavator.

An objection of the invention is to provide a new and improved window assembly whereby operation of the window assembly is facilitated.

According to a first aspect of the invention, we provide an openable window assembly comprising a pair of spaced longitudinally extending side frame members which define therebetween a generally upwardly extending opening which is openable or closable by a window wherein each side frame member has a first guide means to guide a first element associated with the window generally longitudinally of the side frame members and power means to cause movement of the window relative to the guide means whereby said opening may be opened or closed by said window.

By generally upwardly we mean not only an opening which is vertical but also an opening which is inclined to the vertical at no more than about 45°.

The window may be provided with a second guide means whereby an upper part of the window is guided for movement inwardly relative to the side frame members from said closed position.

An upper end of the window may be guided by the second guide means for movement upwardly and inwardly relative to the side frame members from said closed position.

When the window assembly is provided in an operator's cabin the inward direction is a direction towards the interior of the cabin from the exterior thereof. When the window assembly is the rear window of the cabin the inward direction extends forwardly towards the front of the cabin and hence vehicle.

A lower end of the window may be guided by said first guide means so as not to project inwardly of the side frame members at any time during movement between positions in which the opening is opened or closed.

By virtue of the above-mentioned guided movement of the window, interior space of an operator's cabin with which an openable window assembly embodying the invention may be fitted is unobstructed to any significant extent by the window during opening or closing so that an operator does not obstruct such movement of a window.

An upper part of the window may be provided with a pair of second guide elements which are engaged with an elongate track comprising said second guide means which is adapted to extend generally inwardly relative to the side frame members.

The window may be provided with two first guide elements at opposite sides of the window at a position intermediate upper and lower ends of the window and closer to the lower end of the window than the upper end, said first guide elements being pivotable and slidable relative to the first guide means.

The power means may comprise drive means connected to the window at or adjacent an upper end part thereof to cause movement of the second guide elements along said second guide means.

The drive means may comprise a cable drive, the cable drive being associated with at least one of said second guide elements and being guided to follow the second guide means.

The cable may be adapted to be moved by a power means comprising a motor.

Each second guide element is associated with a separate cable and each cable may be driven by a common motor. Each cable may be positioned within a guide element such as a tube and the motor may be disposed intermediate the second guide elements so that the cables extend from a position in which they are guided by the second guide elements to a position in which they extend transversely relative thereto.

Parts of the cables not connected to a window and extending on the opposite side of the motor to the part of the cable connected tot he window may be guided in a track disposed outwardly of the part of the other cable connected to the window.

The window may be carried in a frame which carries first and second guide elements.

The second guide means may be inter-connected by at least one transversely extending element and a rear transversely extending element may carry said power means.

In one more specific aspect of the first aspect of the invention the second guide means may be curvilinear configuration and the extent of curvature may vary and may be provided with points of inflection depending upon the track to be followed by the upper end of the window.

The second guide means may be provided with a generally downwardly extending forward portion so as to increase the height of the second guide means at the rear of the assembly.

The second guide elements may be carried on bracket means which project upwardly and forwardly from an upper end part of the window.

A sub-assembly of second guide means and at least one transverse member may be mountable in an operator's cabin.

The side frame members may comprise side frame members of an operator's cabin.

If desired, the side frame members and first guide means may already be present in an operator's cabin for manual opening of a window and such a cabin may be converted for power operation of a window by mounting in the operator's cabin the above-described sub-assembly.

In a second more specific aspect of the first aspect of the invention, the openable window is as described in connection with the first aspect of the invention, except that the second guide elements are carried on brackets which are pivotally connected to the window at or adjacent the upper end. In this case, the second guide element may be rectilinear. The second guide elements may be carried on bracket means which project upwardly and forwardly from an upper end part of the window.

In a third more specific aspect of the first aspect of the invention the second guide element comprises a lever adapted to be mounted adjacent an upper part of the side frame members and pivotally connectable to the window at a position spaced intermediate the ends thereof and spaced from but closer to the upper edge of the window, said lever being rotatable about an axis extending parallel to said opening at a position adjacent an upper edge of the opening and disposed rearwardly thereof wherein the arm is offset so that when the window is closed the arm includes a downwardly extending portion which is parallel to the opening, whilst when the window is opened fully said arm is also parallel to the plane of the window when the window is opened but rotated through 180° whilst in intermediate positions said part's orientation relative to the window varies in accordance with its pivotal connection thereto. The arm may be rotatable about said transverse axis by a suitable power means such as a motor.

In this embodiment, the first guide means and guide elements are substantially as described in connection with the previous aspects.

In a fourth more specific aspect of the first aspect of the invention the drive means is connected to the first guide elements and the second guide elements may comprise a link pivotally connected at one end to the window at a position intermediate the ends of the window but disposed so as to be spaced from the upper end but closer towards the upper end than the lower end and at its other end about a position adjacent an upper part of the opening.

The first guide element may be pivotally connected to the window at a position intermediate the upper and lower ends spaced from the lower end but closer to the lower end than the upper end and pivotally connected at its other end to said first guide member.

In this case, operation of the drive means causes movement of the first guide element upwardly or downwardly relative to the first guide means, whilst the above-described second guide element restrains the upper end of the window to follow said predetermined path.

A disengageable abutment means may be provided between the frame and the window for engagement as the window is closed so as to cause pivotal movement of the window relative to the frame on continued movement of the first guide elements.

In a fifth more specific aspect of the first aspect of the invention the second guide means are rectilinear and generally parallel to the roof of the cabin.

Each second guide element may be carried on a bracket means which projects upwardly, forwardly and then rearwardly from an upper end part of the window so that the second guide element is disposed above the window and not substantially forwardly of the window.

Each second guide means may have means to connect a trim member thereto.

Releasable means may be provided releasably to connect the power means to the window.

Support means may be provided to receive the first guide elements when the window is in a fully open position and support the first guide elements therein.

According to a second aspect of the invention we provide a window assembly according to the first aspect of the invention when provided in an operator's cabin.

The operator's cabin may be a cabin of a vehicle such as a material handling vehicle, for example, a backhoe excavator.

Five embodiments of the invention will now be described by way of example with reference to the accompanying drawings, wherein
FIGURE 1 is a diagrammatic side elevation of an operator's cabin of a backhoe excavator embodying the invention,
FIGURE 1a is an exploded perspective view, to an enlarged scale, of part of the cabin of Figure 1,
FIGURE 1b is an exploded perspective view, to a greater enlarged scale, of part of the cabin of Figure 1,
FIGURE 2 is a view similar to that of Figure 1 showing a second embodiment of the invention,
FIGURE 3 is a view similar to that of Figure 1 but of a third embodiment of the invention, and
FIGURE 4 is a similar view showing a fourth embodiment of the invention.
FIGURE 4a is a view similar to that of Figure 4 but shown at first stage of closing of the window of Figure 4,
FIGURE 4b is a cross-section through the window frame of Figure 4.
FIGURE 5 is a fragmentary perspective view showing a fifth embodiment of the invention,
FIGURES 6a - 6c are side elevations of the embodiment of Figure 5 and showing movement of the window between a closed and an open position,
FIGURE 7 is a fragmentary perspective view to an enlarged scale of part of the cabin of Figure 5,
FIGURE 8 is a fragmentary cross sectional view to an enlarged scale showing a guide element of the cabin of Figure 5 and its connection to a window, and
FIGURE 9 is a diagrammatic side view of a back hoe excavator embodying the invention.

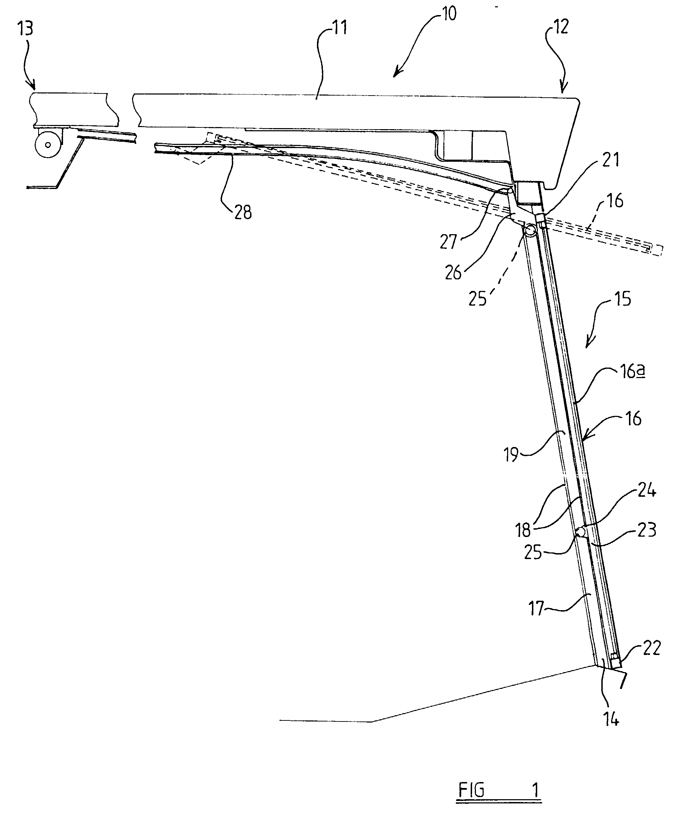

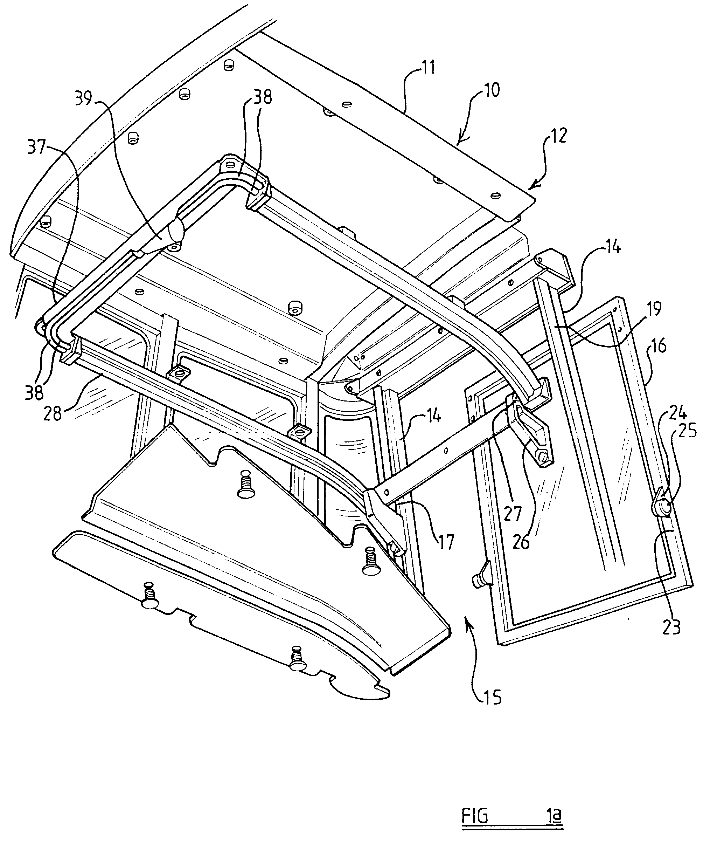

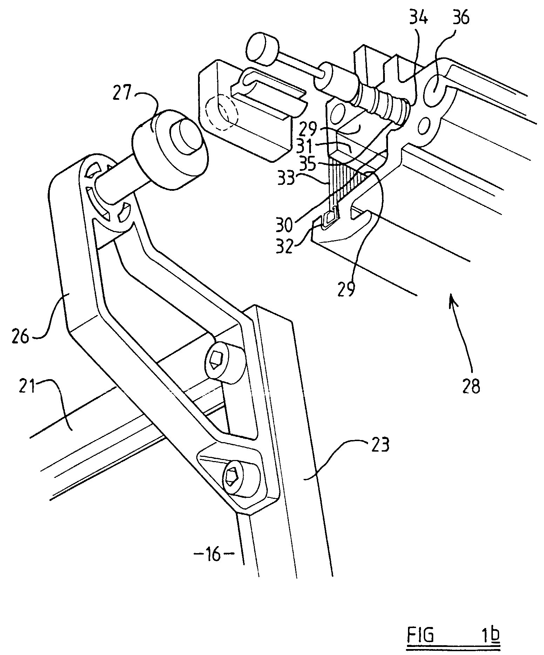

Referring now to Figure 1. An operator's cabin is indicated generally at 10 and comprises a roof 11 having a rear end 12 and a front end 13. In use, the rear end 12 faces rearwardly of the excavator so as to be adjacent a backhoe excavator E which is provided at the rear of the vehicle, whilst a front end loader L is conventionally provided at the front of the vehicle. So far as the vehicle and cabin are concerned, the front and rear refer to the direction in which the vehicle is driven on the public highway.

At the rear 12 of the operator's cabin there is provided a pair of parallel side members 14 which define therebetween a generally rectangular opening 15 which is closable by a window 16 or fully openable by the window 16 when it occupies the dotted line position shown in Figure 1.

The side frame members 14 are elongate in their longitudinal direction and define therebetween the opening 15 which is generally upstanding and is closable by the window 16. Each side frame member 14 has a first guide means therein, indicated generally at 17, and comprising a channel-shaped configuration having a pair of side members 18 and a base 19 therebetween.

The window 16 has upper, lower and side frame members 21,22,23 closed by a pane of suitable glass or the like 16a. The side frame members 23 each have a bracket 24 on which a wheel 25 is rotatably mounted for rotation about an axis extending transversely of the window. Each wheel 25 comprises a first guide element and is positioned within the channel-shaped first guide means 17 so as to be guided thereby longitudinally of the side frame members between a lowermost position shown in full line in Figure 1, and an uppermost position shown in dotted line in Figure 1.

At its upper end, each side frame member 23 has a further cranked bracket 26 fixed thereto and a wheel 27 is rotatably mounted on each cranked bracket 26 for rotation about a further transverse axis. Each wheel 27 comprises a second guide element which is guided by a second guide means 28 which comprises a generally channel-shaped member having upper and lower side limbs 29 and a base wall 30, together with a smaller cross-section entrance portion provided by inwardly directed lip 31. One limb 29 is provided with a dovetail configuration groove 32 in which a brush element 33 is received to close the resultant slot except for permitting passage of the axle upon which the wheels 27 are carried.

The base wall 30 is provided with a generally part circular configuration groove 34 in which one run 35 of a cable is constrained to slide. The second guide elements have a second part-circular configuration groove 36 therein to receive a return run of the opposite cable.

The second guide means 28 are connected together at their front ends by a front transverse member 37 and suitable tubes 38 extend through 90° and are carried on the rear transverse member 37 for engagement with the grooves 34,36 to receive the cables therein to direct them transversely to a motor 39 mounted on the transverse member 37 for rack and pinion engagement with the pinion of the motor 39 for translational movement of the cables within their associated grooves 34,36. Each cable in each inner groove 34 is connected to the second guide elements. The opposite ends of each cable are guided by the opposite guide means and are engaged in the outer grooves with the tubes 38 crossing over as necessary. At their rear ends the second guide means 28 are connected by a rear transverse member 37a. Accordingly, the second guide means 28, transverse members 37, 37a and associated motor 39, cable 35 and associated parts comprises a sub-assembly which may be mounted in the driver's cabin. If desired an existing driver's cabin may be modified so as to be provided with a power operated opening window by fitting such a sub-assembly to an existing cabin.

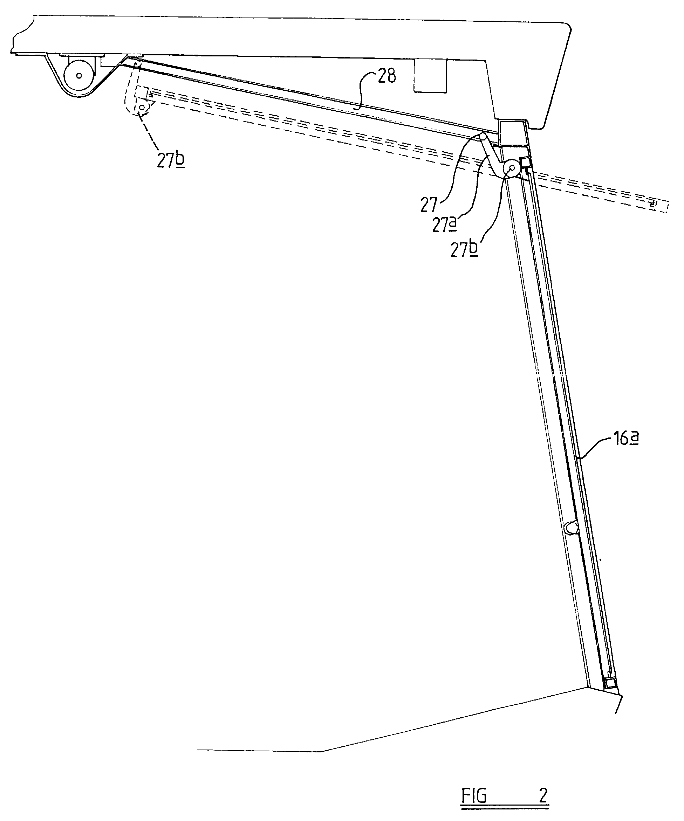

In use, assuming that the window is in a closed position as shown in full line in Figure 1, operation of the motor 39 by the operator causes the cables in the groove 34 to be moved forwardly and inwardly towards the end 13 of the cabin, thereby moving therewith the second guide elements along the second guide means 28. As a result the first guide elements 25 are caused to move upwardly within, and not constrained by, the channel 17 so that the top of the window moves from the position shown in full line in Figure 1 to the dotted line position shown in Figure 2.

It will be appreciated that the arrangement of the window during such movement is such that it impinges upon the interior of the cabin to a very limited extent so that the presence of the driver does not obstruct movement of the window.

Referring now to Figure 2. The same reference numerals have been used in Figure 2 to refer to corresponding parts as were used in Figure 1 and operation of the window is substantially as described in connection with Figure 1, except that the second guide elements are carried on brackets 27a which are pivotally connected to the frame of the window as indicated at 27b. In addition, the second guide means 28 is rectilinear and the window, when open, occupies the position shown in dotted line in Figure 2. In other respects, the window and its mode of operation are substantially as described hereinbefore in connection with Figure 1.

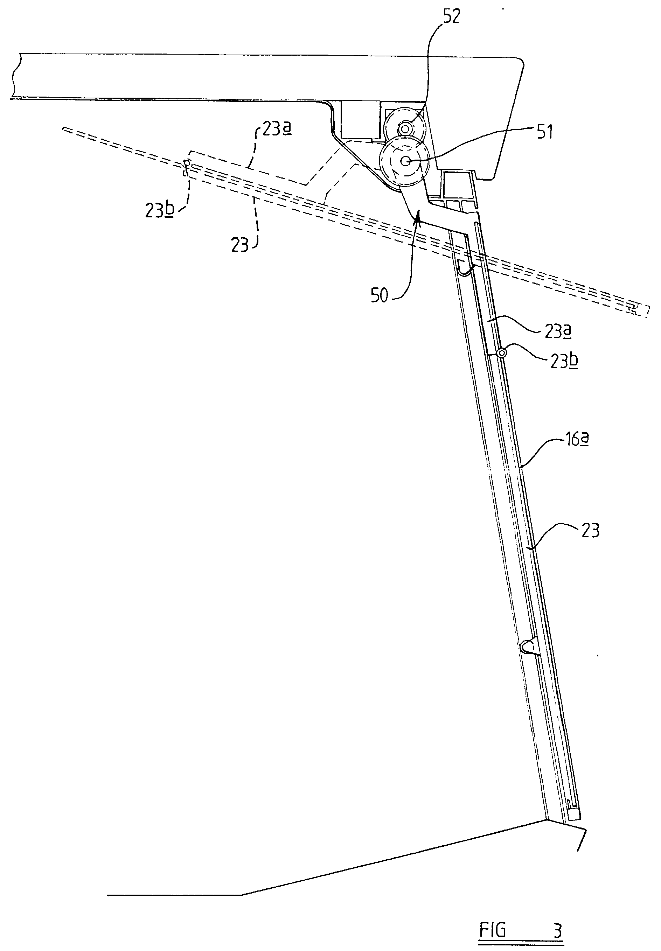

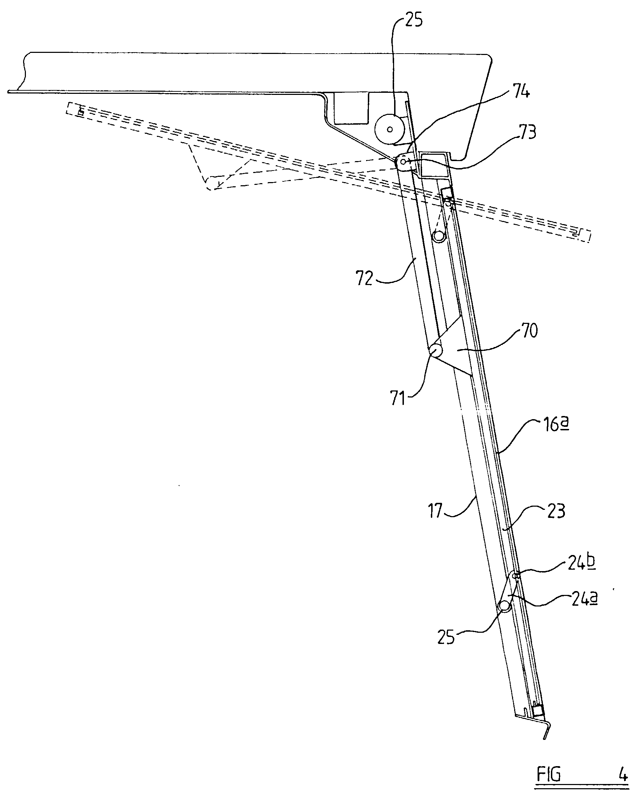

Referring now to Figure 3. Again, the same reference numerals have been used to refer to corresponding parts as were used in Figures 1 and 2. In this embodiment, the first guide means and first guide elements are substantially as described in connection with the first embodiments but the window frame differs in that an upper part of the side members 23 of the frame, as indicated at 23a, is pivotally connected to a lower part of the frame about a transversely extending axis 23b and comprises one limb of a cranked lever 50 which is pivotally mounted for rotation about a transverse axis 51 adjacent to, but spaced slightly above and forwards of, the opening 16. The lever 50 is geared to be rotated by a motor 52 between a closed position, shown in full line in Figure 3, and an open position, shown in dotted line in Figure 3. In this case the glass 16a is secured only to the lower part of 23b of the frame and the upper part 23a of the frame is moveable relative to the pane of glass 16a. The pane of glass 16a in its upper part abuts against suitable sealing means provided on a shoulder of the upper frame part 23a when the window is in the closed position. The extent of movement of the lever 50 and the manner of its pivotal connection to the remainder of the frame 23 during such movement is illustrated in Figure 3.

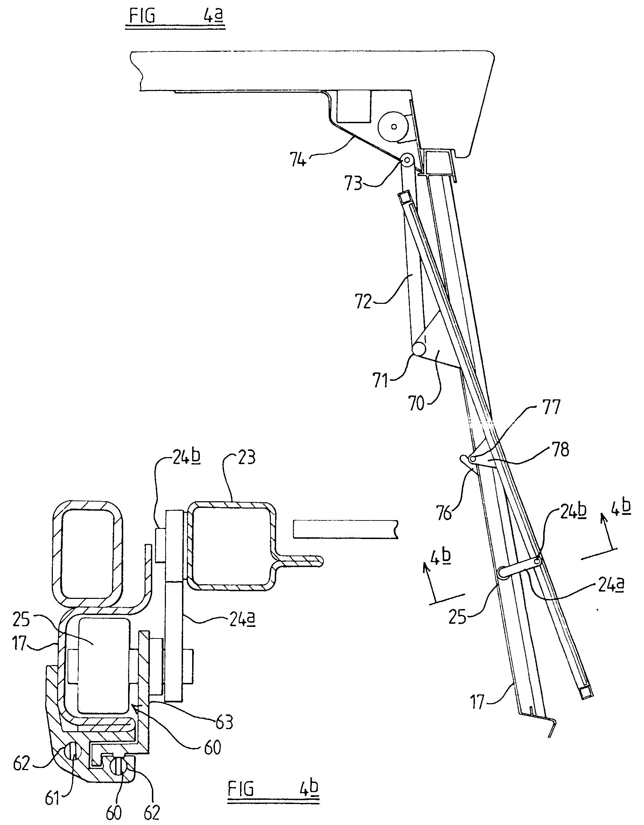

Referring now to Figure 4. A fourth embodiment is illustrated and, again, the same reference numerals have been used to refer to corresponding parts as have been used in the previous drawings. In this embodiment, the window frame 23 is connected to a first guide element 25 by a link 24a which is pivotally connected to the frame 23 about a transverse axis 24b. Towards its upper end, the frame 23 is fixed to a bracket 70 on opposite sides of the window and the bracket 70 is pivotally connected about a transverse axis 71 to a lever 72 which is pivotally connected about a further transverse axis 73 to a bracket 74 fixed relative to the cabin at a position adjacent to, but above and to the rear of the opening 16. The side frame members 17 are provided with grooves 60,61 not shown, similar to the grooves 34,36 provided in the first embodiment for cables 62 extending longitudinally of the frame members 17 from a transversely disposed motor 75, the cables being turned through 90° to extend transversely in a similar manner to the first embodiment. The cables 62 in the inner groove 60 are connected at one end to the first guide element 25 by a bracket 63.

In use, the window is moved from the closed position shown in full line in Figure 4 by operating the motor 75 so that the cables move the first guide elements 25 upwardly. Such initial movement causes pivotal movement of the window initially from the position shown in Figure 4 to the position shown in Figure 4a as a result of pivotal movement of the link 24a and pivotal movement of the link 72 as a result of the disengageable stop means provided by the abutment member 76 fixed to the side frame members 17 engaging a lug means 77 carried on a bracket 78 fixed to the window. Continued movement of the first guide elements 25 upwardly with continued pivoting of the window until it occupies the dotted line position shown in Figure 4.

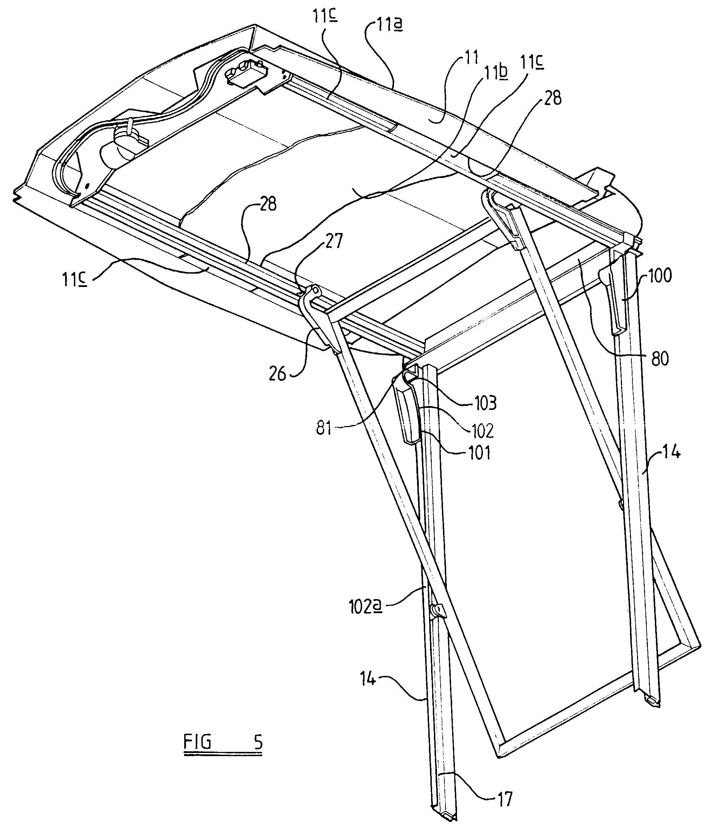

Referring now to Figures 5 to 7, a fifth embodiment is illustrated which is similar to the first embodiment and, again, the same reference numerals have been used to refer to corresponding parts as have been used in Figures 1 to 1b.

This embodiment is similar to the first embodiment except for the differences illustrated and the differences set out below. In this embodiment the second guide means 28 are each rectilinear and the roof 11 of the operator's cabin 10 is modified compared with that of the first embodiment so as to enable the second guide means 28 to be disposed generally parallel and relatively close to the upper surface 11a of the roof 11.

At the front of the roof there is provided a transversely extending member 80 of generally box section but having a pair of channel section end portions 81 in which are received forward end portions of the second guide means 28. Thus in this embodiment the second guide elements 28 are connected together by the transversely extending member 80 which is an integral part of the cabin and so in this embodiment the second guide means 28 are not provided in the form of a sub assembly for fitment to an existing cabin. The roof 11 has a forward portion 11d which is of a reduced height and accommodates a forward part of the second guide means. The second guide elements provided by each wheel 27 are carried on a cranked bracket 26 which is similar to the bracket shown in Figures 1 - 1b but modified to have a first limb which extends further rearwardly when the window is closed, than in the first described embodiment and a second limb which enters upwardly and forwardly so that the bracket is of general hook shape and the second guide elements are disposed above and substantially in the plane of the rear of the window, thereby providing a compromise between the window clearing the head lining with which the roof 11 is provided and lack of obstruction to the operator when the window is open as in this condition the first limb of the bracket extends generally downwardly and hence the extent of downward extension in this condition is to be minimised.

By providing the second guide means 28 of the above mentioned rectilinear configuration it is adapted to fit close to the headlining part 11b and also is simpler to manufacture than the curved second guide means of the first embodiment.

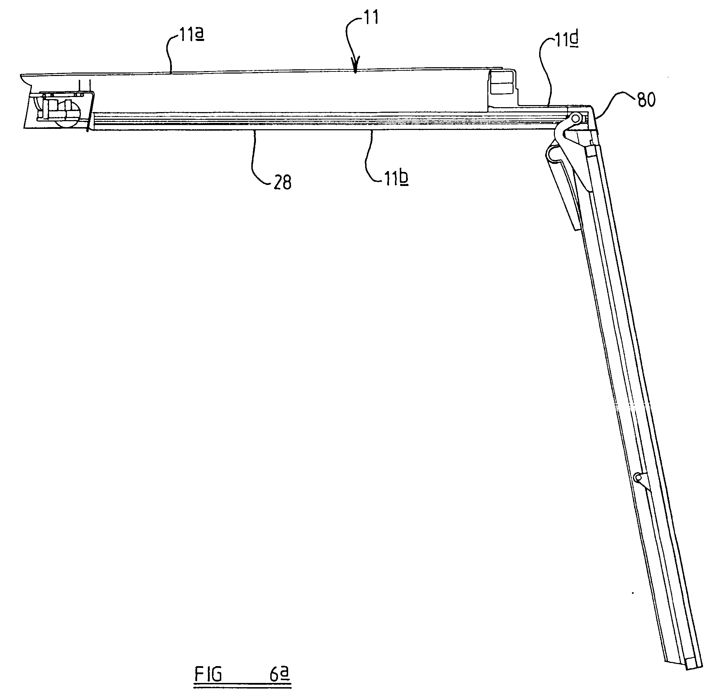

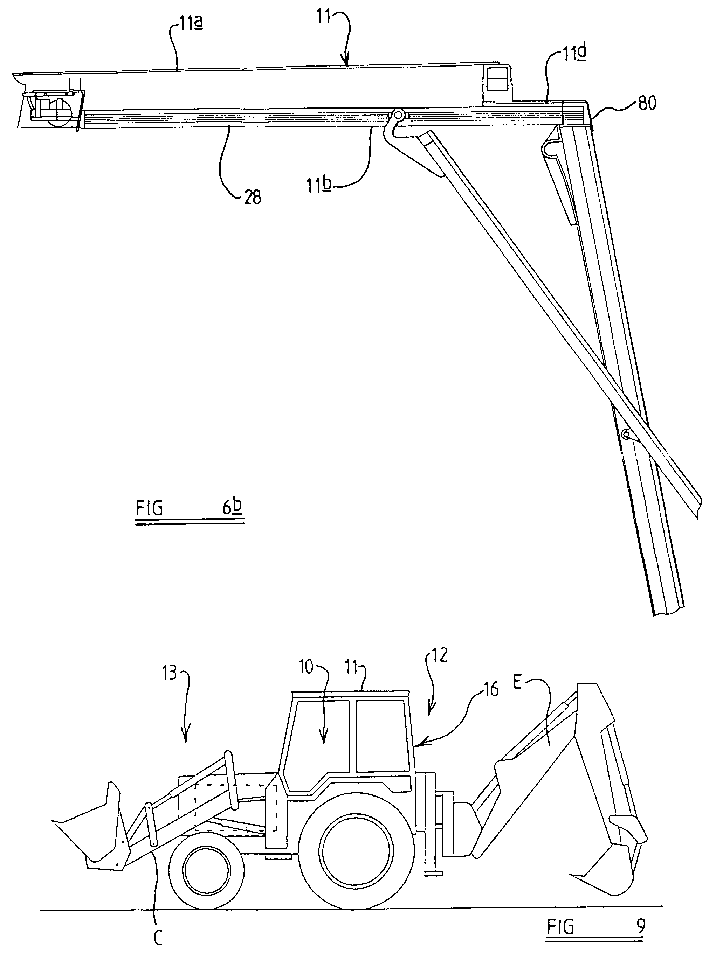

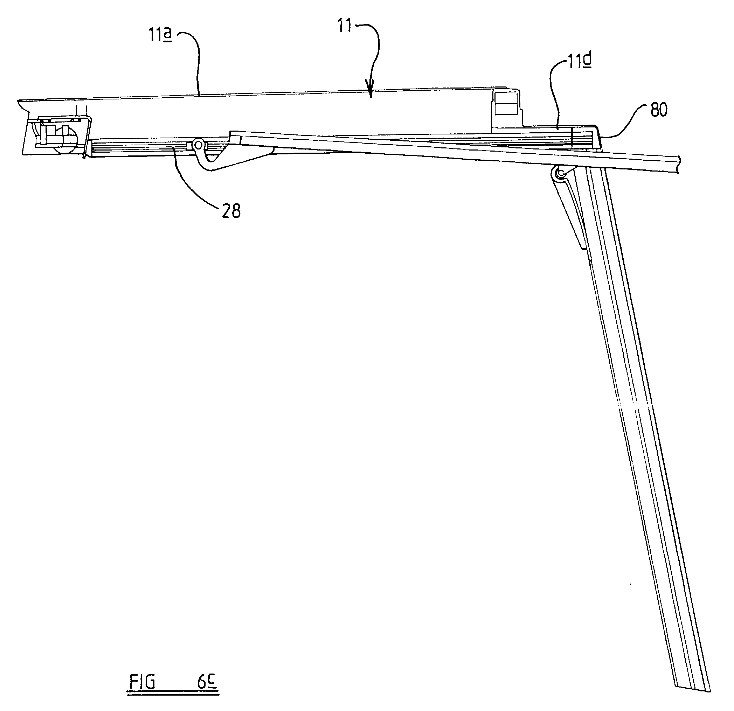

Figures 6a to 6c show the sequence of movement of the window from a closed position, shown in Figure 6a, to a fully open position shown in Figure 6c.

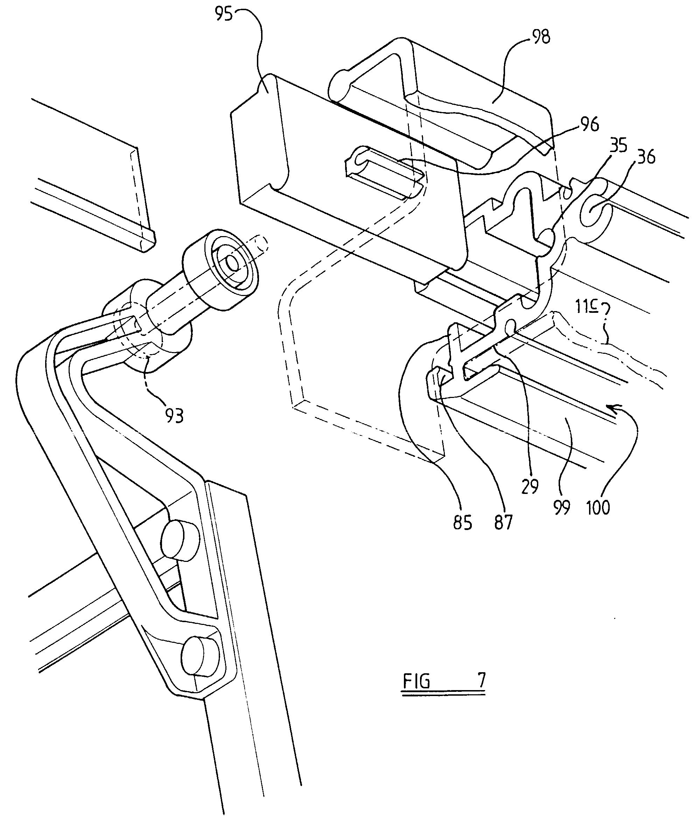

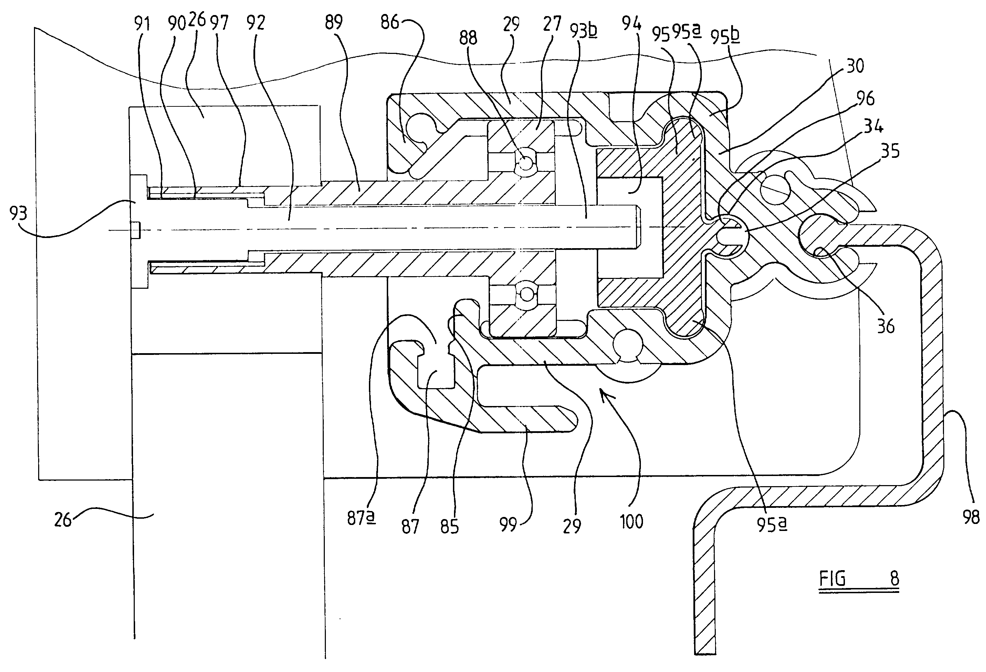

Referring now particularly to Figures 7 and 8 each second guide means 28 comprises a generally channel shaped member having upper and lower side limbs 29 and a base wall 30 together with a smaller cross section entrance portion provided by an inwardly directed lip 85 of the lower limb 29 and an inclined lip 86 of the upper limb 29. The lower limb 29 is also provided with a groove 87 having a reduced width mouth part 87a in which a brush element 33 is received to close the resultant slot except for permitting passage of an axle upon which the wheels 27 are carried. The base wall 30 is provided with a generally part circular configuration groove 34 in which one run 35 of a cable is constrained to slide.

The second guide means 28 also have a second part-circular configuration groove 36 therein to receive a return run of the opposite cable. At the rear ends thereof the groove 36 is used to receive an end part of a pair of mounting brackets 98 whereby the guide means 28 are fastened to the remainder of the cabin.

Each wheel 27 is rotatably mounted by a ball bearing 88 on a tubular shaft 89 which has a internally threaded end part 90 which is threadedly engaged with a threaded part 91 of a pin 92 having a slotted head 93a at one end and having another end part 93b which drivingly engages in a pocket 94 of a slider 95 having upwardly and downwardly projecting flanges 95a slideably received in a correspondingly shaped part 95b of the second guide means 28. The slider 95 is provided with a socket part 96 for engagement with the run 35 of the cable. The slider 95 is made of suitable synthetic plastics material and is resiliently drivingly engaged with the cable run 35.

An outer end part 97 of the tubular shaft 89 is non-rotatably received, by virtue of being a push fit or by other means, in the respective bracket 26. By unscrewing the pin 92 out of engagement with its associated tubular shaft 89 and slider 95 the window may be manually opened or closed as desired. If desired any other form of release means may be provided between the pin 92 and the slider 95. For example a bayonet or other quick release type fastening means may be provided between the pin 92 and the shaft 89.

Internally of the cabin the roof 11 is provided with a middle head lining part 11b which terminates adjacent or above the associated guide element 28.

Each channel shaped guide means 28 has a return limb 99 which provides a channel shaped recess 100 to receive an edge part of an outer head lining part 11c therein. The head lining part 11c thus covers from view the underside of the majority of the channel shaped member 28 except for the lower surface of the return limb 99. Alternatively instead of terminating adjacent or above the associated guide means 28, the head lining part 11b may extend continuously over the top of the guide means 28 to the edge of the cabin, for example to provide good sound insulation, and in this case a separate trim element may be provided engaged in the recess 11 to cover from view the underside of the majority of the channel shaped member 28. Further alternatively such a separate trim element may be omitted completely if desired.

At the upper end of each side member 14 a bracket member 101 is provided having a forwardly curved lead in portion 102 which provides a continuation of a flange part 102a of the first guide means 17 to guide the first guide elements 25 into a generally forwardly extending pocket of channel configuration 103. Accordingly, when the window is fully open the guide elements 25 are supported by the lower limb of the pockets 103 thereby relieving tension in the above described cables.

When it is desired to close the window, cables push the guide elements 25 out of the pockets 103 and they are deflected downwardly by virtue of the lead in portion 102 and the opposed part of the first guide means 17.

When the window is manually operated by virtue of disconnecting the pin 92 from the slider 95 the window is maintained in a fully open position by virtue of engagement of the guide elements 25 in the pockets 103.

A window in accordance with any of the preceding embodiments may be operated by a suitable manual control such as an up or down button and this button may be positioned for convenient operation by the driver when the driver is either in his forward driving position or his rearward, backhoe, operating position. The window embodying the present invention is simple to operate and has relatively little intrusion into the interior space of an operators cabin provided with the window assembly, and indeed has less internal obstruction than the handles and links commonly provided when a window is arranged for manual operation. In addition the window embodying the present invention may be locked in any position from closed to fully open by virtue of ceasing operation of the motor, the drive from the motor being a locking drive such as by virtue of a worm and wheel.

The features disclosed in the foregoing description, or the accompanying drawings, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

## Claims

1. An openable window assembly comprising a pair of spaced longitudinally extending side frame members which define therebetween a generally upwardly extending opening which is openable or closable by a window wherein each side frame member has a first guide means to guide a first element associated with the window generally longitudinally of the side frame members and power means to cause movement of the window relative to the guide means whereby said opening may be opened or closed by said window.

2. A window according to claim 1 wherein the window is provided with a second guide means whereby an upper part of the window is guided for movement inwardly relative to the side frame members from said closed position.

3. A window according to claim 2 wherein an upper end of the window is guided by the second guide means for movement upwardly and inwardly relative to the side frame members from said closed position.

4. A window according to claim 3 wherein the lower end of the window is guided by said first guide means so as not to project inwardly of the side frame members at any time during movement between positions in which the opening is opened or closed.

5. A window according to any one of claims 2 to 4 wherein an upper part of the window is provided with a pair of second guide elements which are engaged with an elongate track comprising said second guide means which is adapted to extend generally inwardly relative to the side frame members.

6. A window according to claim 5 wherein the window is provided with two first guide elements at opposite sides of the window at a position intermediate upper and lower ends of the window and closer to the lower end of the window than the upper end, said first guide elements being pivotable and slidable relative to the first guide means.

7. A window according to any one of the preceding claims wherein the power means comprises drive means connected to the window at or adjacent an upper end part thereof to cause movement of the second guide elements along said second guide means.

8. A window according to claim 7 wherein the drive means comprises a cable drive, the cable drive being associated with at least one of said second guide elements and being guided to follow the second guide means.

9. A window according to claim 8 wherein the cable is adapted to be moved by said power means which comprises a motor and each second guide element is associated with a separate cable and each cable is driven by a common motor.

10. A window according to claim 9 wherein each cable is positioned within a guide element and the motor is disposed intermediate the second guide elements so that the cables extend from a position in which they are guided by the second guide elements to a position in which they extend transversely relative thereto.

11. A window according to claim 9 or 10 wherein parts of the cables not connected to a window and extending on the opposite side of the motor to the part of the cable connect to the window are guided in a track disposed outwardly of the part of the other cable connected to the window.

12. A window according to any one of claims 5 to 11 wherein the second guide elements are interconnected by at least one transversely extending element and a rear transversely extending element carries said power means.

13. A window according to any one of claims 5 to 12 wherein the window is carried in a frame which carries said first and second guide elements.

14. A window according to claim 5 or any one of claims 6 to 13 when dependent on claim 5 wherein the second guide elements are of curvilinear configuration.

15. A window according to any one of claims 5 to 14 wherein each second guide element is carried on bracket means which project upwardly and rearwardly from an upper end part of the window.

16. A window according to claim 5 or any one of claims 6 to 15 when dependent on claim 5 wherein a sub-assembly of second guide elements and at least one transverse member is mountable in an operator's cabin.

17. A window according to claim 16 wherein the side frame members and first guide means are already present in an operator's cabin for manual opening of a window and such a cabin is converted for power operation of a window by mounting in the operator's cabin the sub-assembly of claim 16.

18. A window according to claim 5 or any one of claims 6 to 13 when dependent on claim 5 wherein each second guide element is carried on a bracket which is pivotally connected tot he window at or adjacent the upper end.

19. A window according to claim 5 or any one of claims 6 to 13 when dependent on claim 5 or claim 18 wherein the second guide element is rectilinear.

20. A window according to claim 5 or any one of claims 6 to 13 when dependent on claim 5 wherein the second guide element comprises a lever adapted to be mounted adjacent an upper part of the side frame members and pivotally connectable to the window at a position spaced intermediate the ends thereof and spaced from but closer to the upper edge of the window, said lever being rotatable about an axis extending parallel to said opening at a position adjacent an upper edge of the opening and disposed rearwardly thereof wherein the arm is offset so that when the window is closed the arm includes a downwardly extending portion which is parallel to the opening, whilst when the window is opened fully said arm is also parallel to the plane of the window when the window is opened but rotated through 180° whilst in intermediate positions said part's orientation relative to the window varies in accordance with its pivotal connection thereto.

21. A window according to claim 20 wherein the arm is rotatable about said transverse axis by a suitable power means such as a motor.

22. A window according to claim 5 wherein the drive means is connected to the first guide elements and the second guide elements comprise a link pivotally connected at one end to the window at a position intermediate the ends of the window but disposed so as to be spaced from the upper end but closer towards the upper end than the lower end and at its other end about a position adjacent an upper part of the opening.

23. A window according to any one of the preceding claims wherein a disengageable abutment means is provided between the frame and the window for engagement as the window is closed so as to cause pivotal movement of the window relative to the frame on continued movement of the first guide elements.

24. A window according to claim 5 or any one of claims 6 to 13 when dependent on claim 5 wherein the second guide means are rectilinear and generally parallel to the roof of the cabin.

25. A window according to claim 5 or any one of claims 6 to 13 when dependent on claim 5 or claim 24 wherein each second guide element is carried on bracket means which project upwardly, forwardly and then rearwardly from an upper end part of the window so that the second guide element is disposed above the window and not substantially forwardly of the window.

26. A window according to claim 5 or any one of claims 6 to 13 or claim 24 or claim 25 wherein each second guide means has means to connect a head liner thereto.

27. A window according to any one of the preceding claims wherein releasable means are provided releasably to connect the power means to the window.

28. A window according to any one of the preceding claims wherein support means are provided to receive the first guide elements when the window is in a fully open position and support the first guide elements therein.

29. A window assembly according to any one of the preceding claims when provided in an operator's cabin.

30. A window assembly according to claim 29 wherein the operator's cabin is a cabin of a vehicle such a material handling vehicle which may comprise a back-hoe excavator.
